# EUROPEAN PATENT APPLICATION

(11) **EP 0 676 229 A1**
(43) Date of publication of application: **11.10.1995**
(21) Application number: 94202523.0
(22) Date of filing: 05.09.1994
(51) Int. Cl.: B01D 46/52, B60H 3/06

(54) **Air filter with polyurethane support, particularly for motor vehicle passenger compartment**

(30) Priority: 11.04.1994 IT TO940070 U
(71) Applicant: TECNOCAR S.r.l., I-10146 Turin (IT)
(72) Inventor: Borasio, Franco, I-13034 Desana (Vercelli) (IT); Baracchi, Paolo, I-10151 Turin (IT)
(74) Representative: Robba, Eugenio

(57) **Abstract**

An air filter (1) for motor vehicle passenger compartments, comprising at least one filtering layer (3) and a polyurethane support (5), is disclosed. The filtering layer (3) is sealingly inserted into the support (5) due to the polyurethane being expanded around the filtering layer (3) when producing the filter (1). The polyurethane support (5) is at least as high as the filtering layer (3).

## Description

The present invention refers to an air filter equipped with a polyurethane support, to be used on motor vehicles, particularly to filter air incoming into the passenger compartment.

Various types of air filter for passenger compartment are known in the art, all characterized in that they have one or more filtering layers, made of paper or other similar fabrics, that are pleated shaped and are kept together by external support structures made of plastics, paper or other material. These filters, usually rectangular in shape (but also of any other geometric shape) with their longer sides whose length is much greater than that of the shorter sides, are placed at the air intake opening, and must have some strength and seal on all four sides: for this purpose, glue is inserted between the various paper pleats and this increases complexity, length and cost of the process to produce the filter. Furthermore, it is necessary to prearrange suitable sealing gaskets between filter and air inlet opening.

Object of the present invention is solving the above-mentioned problems, providing a filter that is simple and inexpensive to produce, in such an arrangement as to simultaneously allow strength on all sides, support for the filter as a whole and air-tightness during operation. The filter object of the present invention is produced through an innovative polyurethane-injecting process, that is disclosed in the European Patent No. 0̸ 486 846 in the name of Gilardini S.p.A.

The above and other objects and advantages of the invention, such as those resulting from the following description, are obtained with an air filter for motor vehicle passenger compartment comprising:
at least one filtering layer;
a polyurethane support, said at least one filtering layer being sealingly inserted into said support;
characterized in that said polyurethane support is at least as high as said at least one filtering layer, said support being formed in order to completely sorround and wrap all edges of said at least one filtering layer.

The present invention will be better described by some preferred embodiments thereof, provided as a non limiting example, with reference to the enclosed drawings, in which:
- Figure 1 is a perspective front view of an embodiment of the present invention; and
- Figure 2 is a sectional side view of the filter shown in Fig. 1.

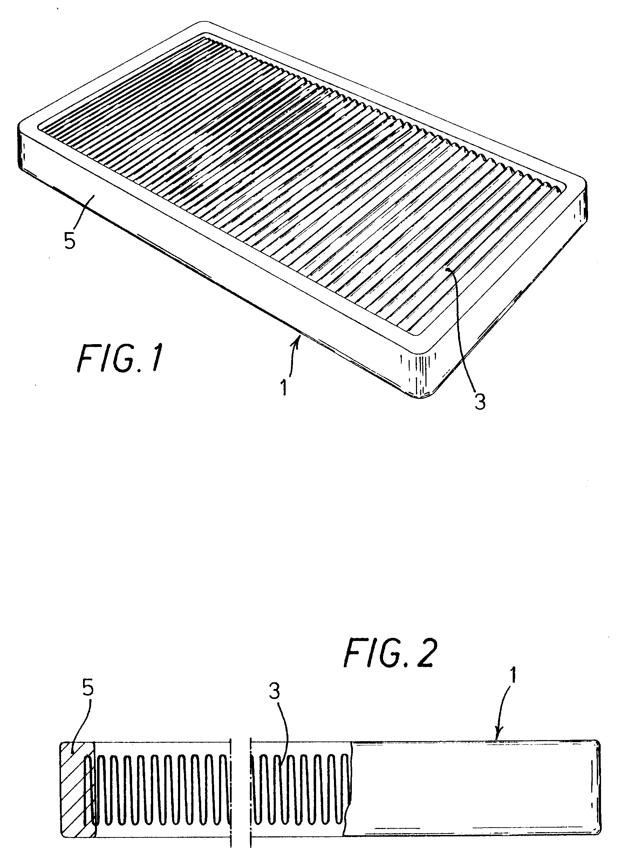

With reference to the Figures, the air filter 1 of the present invention essentially includes at least one filtering layer 3, generally composed of a known filtering materials such as paper, non-woven fabric, or a combination thereof; the filtering layer 3 has any geometric shape, that usually is the rectangular shape and generally has a pleated cross-section, as well known in the filtering art.

Around all sides of such filtering layer 3, polyurethane is injected through the abovementioned process; this polyurethane, when expanding, gets to completely wrap and sorround the filtering layer 3, thus forming a support 5. Characteristic of this support 5 is being at least as high as the filtering layer 3, even if, in practice, as also shown in the preferred embodiment of the drawings, the support 5 height is greater than the filtering layer 3 one.

The construction of an air filter 1 with a support 5 with such a height is made possible, obviously, by the above-mentioned innovative process, that can be applied to any type of air filter: in the particular case of an air filter for motor vehicle passenger compartment, the filter produced is quite new and innovative with respect to the existing filters, in which the possible presence of a polyurethane layer was limited to not very high supports, uniquely present with support functions.

With this shape and this characteristic, instead, the air filter of the present invention is equipped with the following features, that are quite new with respect to the prior art:
- the support 5 simultaneously shows strength and flexibility and the filter is immediately available to be installed on a vehicle, without further support members or filter compressing frames;
- the support 5 guarantees a complete sealing, both frontally and laterally, making it useless to apply glue between the filtering layer 3 pleats;
- the support 5 also operates as air-tight gasket inside the filter containing body, thus doing without another constructive part with respect to traditional filters.

## Claims

1. Air filter (1) for motor vehicle passenger compartment comprising:
at least one filtering layer (3);
a polyurethane support (5), said at least one filtering layer (3) being sealingly inserted into said support (5);
characterized in that said polyurethane support (5) is at least as high as said at least one filtering layer (3), said support (5) being formed in order to completely sorround and wrap all edges of said at least one filtering layer (3).

2. Air filter according to claim 1, characterized in that said at least one filtering layer (3) is composed of paper.

3. Air filter according to claim 1, characterized in that said at least one filtering layer (3) is composed of non-woven fabric.

4. Air filter according to claim 1, characterized in that said at least one filtering layer (3) is composed of a combination of paper and non-woven fabric.

5. Air filter according to any of the previous claims, characterized in that said at least one filtering layer has a rectangular shape and a pleated cross-section and said support (5) has a rectangular shape.
